Europäisches Patentamt

European Patent Office

Office européen des brevets

(19)

(11) **EP 1 231 368 B1**

(12) **FASCICULE DE BREVET EUROPEEN**

(45) Date de publication et mention
de la délivrance du brevet:
**08.06.2005 Bulletin 2005/23**

(51) Int Cl.⁷: **F02C 9/28**

(21) Numéro de dépôt: **01403283.3**

(22) Date de dépôt: **18.12.2001**

(54) **Clapet de pressurisation à deux niveaux commandé par un doseur de carburant**

Durch Kraftstoffzufuhrmesseinrichtung gesteuertes zweistufiges Druckregelventil

Two level pressurisation valve driven by a fuel metering device

(84) Etats contractants désignés:
**DE FR GB IT**

(30) Priorité: **22.12.2000 FR 0016895**

(43) Date de publication de la demande:
**14.08.2002 Bulletin 2002/33**

(73) Titulaire: **Snecma Moteurs**
**75015 Paris (FR)**

(72) Inventeurs:
• **Maillard, Claude**
**77870 Vulaines-sur-Seine (FR)**

• **Maillard, David**
**77 590 Bois-le-Roi (FR)**
• **Garassino, Alain**
**77 390 Crisenoy (FR)**

(74) Mandataire: **David, Alain et al**
**Cabinet Beau de Loménie**
**158, rue de l'Université**
**75340 Paris Cedex 07 (FR)**

(56) Documents cités:
**EP-A- 0 915 241          FR-A- 2 610 040**

**Description**

Domaine de l'invention

La présente invention se rapporte de façon générale aux systèmes d'injection de carburant dans les turbomachines.

Art antérieur

Le système d'injection de carburant dans une turbomachine comporte une pompe haute pression pour pressuriser le carburant issu d'un réservoir de carburant, une pluralité d'injecteurs de carburant disposés dans une chambre de combustion de la turbomachine, et interposé entre ces deux ensembles d'éléments un dispositif de dosage de carburant (fuel metering unit) pour contrôler le débit de carburant devant s'écouler dans les injecteurs depuis la pompe haute pression.

Classiquement, le dispositif de dosage comprend un clapet d'arrêt pour délivrer le carburant aux injecteurs après qu'une pression minimale prédéterminée soit atteinte et un moyen de réglage du débit de carburant qui entre en action au delà de cette pression minimale en fonction de différents paramètres de la turbomachine fournis par un calculateur. La demande de brevet française N° 2 718 190 déposée par la demanderesse décrit un tel système conventionnel. Durant la phase de démarrage de la turbomachine, le carburant est pompé dans le réservoir et envoyé vers le dispositif de dosage. Une fois la pression minimale atteinte, le moyen de réglage est activé et le clapet d'arrêt s'ouvre délivrant le carburant aux injecteurs. Un contrôle continu du débit en fonction des paramètres moteur est alors possible en agissant sur le moyen de réglage.

Voir aussi le document EP-A-0 915 241.

Bien que donnant globalement satisfaction, ce système d'injection présente encore certains inconvénients. Notamment, il ne prend pas en compte les différents régimes de fonctionnement de la turbomachine, ce qui aboutit à un surdimensionnement de certains composants du système et à une élévation de température du carburant préjudiciable.

Objet et définition de l'invention

La présente invention propose de pallier ces inconvénients avec un système d'injection qui limite les échauffements du carburant et permet un dimensionnement optimum de ses constituants.

Ces buts sont atteint par un système d'injection de carburant dans une turbomachine, comprenant une pompe haute pression pour pressuriser à une haute pression P1 le carburant issu d'un réservoir de carburant, une pluralité d'injecteurs de carburant disposés dans une chambre de combustion de la turbomachine, et un dispositif de dosage interposé entre ladite pompe à haute pression et ladite pluralité d'injecteurs pour contrôler le débit de carburant s'écoulant dans les injecteurs depuis la pompe à haute pression, caractérisé en ce que ledit dispositif de dosage comporte un clapet de pressurisation piloté selon deux niveaux de pressurisation à partir d'un clapet doseur alimenté en carburant depuis ladite pompe à haute pression.

Avec ces deux niveaux de pressurisation commandés par le clapet doseur, la pression dans le circuit de carburant est limitée aux bas débits, la pression maximale n'étant utilisée que pour les forts débits consommés par la turbomachine.

Le clapet de pressurisation comporte une première entrée d'extrémité reliée à une première sortie d'utilisation dudit clapet doseur et une seconde entrée d'extrémité, opposée à ladite première entrée d'extrémité, reliée d'une part à ladite pompe haute pression au travers d'un premier diaphragme et d'autre part à une seconde sortie d'utilisation dudit clapet doseur au travers d'un troisième diaphragme, l'alimentation en carburant desdits injecteurs reliés à une sortie de pilotage de ce clapet résultant du déséquilibre des pressions appliquées sur ces deux entrées d'extrémité sous l'action d'un calculateur.

De préférence, le clapet doseur comporte un tiroir hydraulique qui peut se déplacer linéairement sous la commande dudit calculateur pour, via deux lumières annulaires, mettre en communication d'une part une première entrée d'alimentation avec ladite première sortie d'utilisation et d'autre part une seconde entrée d'alimentation avec ladite seconde sortie d'utilisation.

Avantageusement, le dispositif de dosage comporte en outre un électro-robinet d'arrêt destiné à agir sur ledit clapet de pressurisation pour couper l'alimentation en carburant desdits injecteurs. Cet électro-robinet d'arrêt comporte une première entrée reliée à ladite pompe haute pression, une seconde entrée mise à une basse pression P2 au travers d'un second diaphragme, et une sortie reliée à ladite seconde entrée d'extrémité du clapet de pressurisation.

Brève description des dessins

Les caractéristiques et avantages de la présente invention ressortiront mieux de la description suivante, faite à titre indicatif et non limitatif, en regard des dessins annexés sur lesquels :

- la figure 1 est une vue schématique dans une première position d'un système d'injection de carburant selon la présente invention, et
- la figure 2 est une vue schématique dans une seconde position d'un système d'injection de carburant selon la présente invention.

Description détaillée d'un mode de réalisation préférentiel

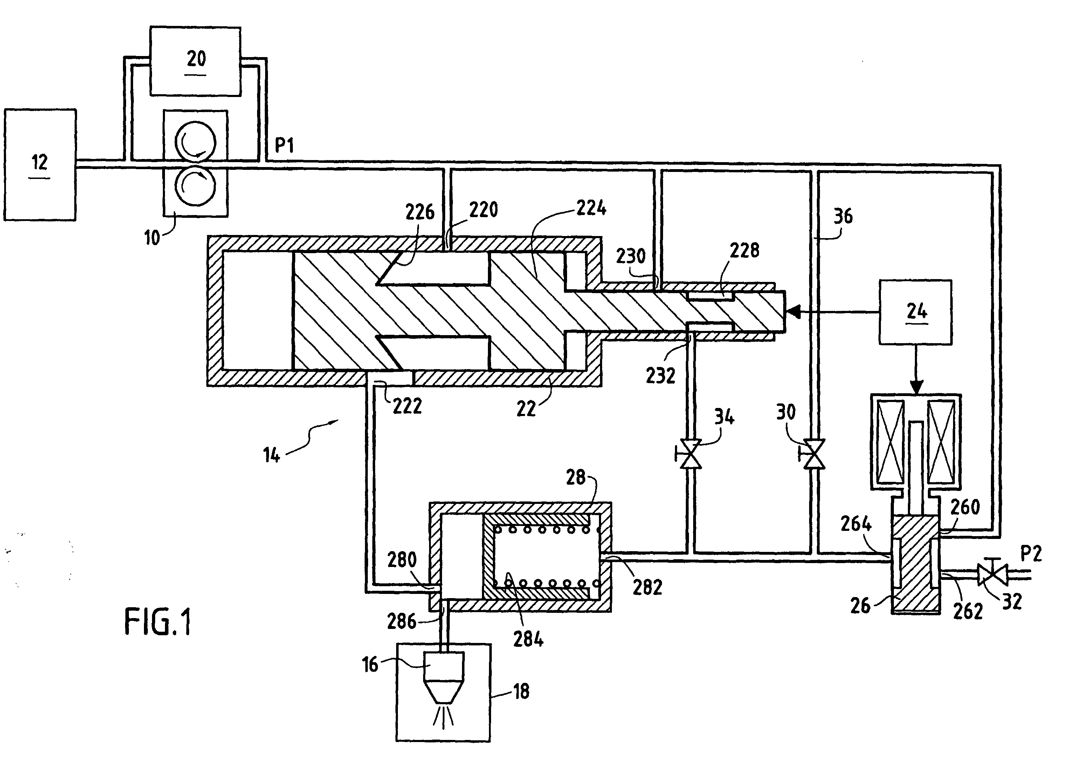

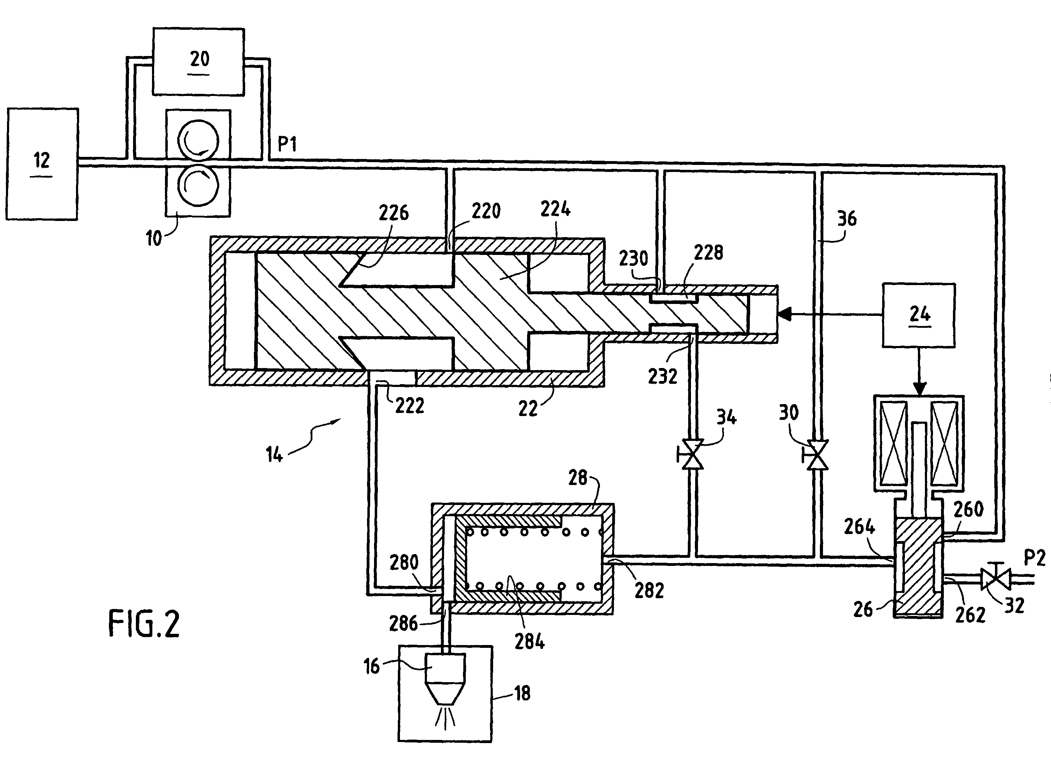

Un système d'injection de carburant d'une turbomachine conforme à l'invention est illustré de façon schématique aux figures 1 et 2.

On y reconnaît une pompe de carburant haute pression (HP) 10 qui soutire du carburant d'un réservoir de carburant 12 pour l'amener via un dispositif de dosage de carburant 14 à des injecteurs 16 d'une chambre de combustion 18 de la turbomachine. Une soupape de type « bypass » 20 est bouclée sur la pompe HP pour recycler le carburant délivré en excès. On appellera « P1 » la haute pression HP en sortie de la pompe haute pression 10.

Le dispositif de dosage est constitué de trois éléments reliés entre eux selon une configuration « en triangle » avec un clapet doseur proprement dit 22 dont une première entrée d'alimentation en carburant 220 est reliée en sortie de la pompe haute pression 10 et qui assure le réglage du débit de carburant en fonction des paramètres de fonctionnement de la turbomachine fournis par un calculateur 24 auquel il est relié, un électro-robinet d'arrêt 26 dont une première entrée 260 est reliée également en sortie de cette pompe haute pression (une seconde entrée 262 étant connectée à la basse pression BP appelée « P2 ») et qui est destiné à couper l'alimentation en carburant des injecteurs sous la commande du calculateur 24 auquel il est également relié, et un clapet de pressurisation 28 dont une première entrée d'extrémité 280 est reliée à une première sortie d'utilisation 222 du clapet doseur et une seconde entrée d'extrémité 282, opposée à la première entrée d'extrémité, est reliée à une sortie 264 de l'électro-robinet d'arrêt.

Le clapet doseur intègre un tiroir hydraulique 224 qui peut se déplacer linéairement sous la commande du calculateur 24. Ce tiroir comporte deux lumières annulaires 226, 228. La première 226 est destinée au dosage du carburant qui est reçu par la première entrée d'alimentation 220 et est refoulé par la première sortie d'utilisation 222. La seconde lumière 228 assure une communication entre une seconde entrée d'alimentation 230 reliée en sortie de la pompe haute pression 10 et une seconde sortie d'utilisation 232 reliée à la seconde entrée d'extrémité 282 du clapet de pressurisation 28.

Le déséquilibre des pressions appliquées sur ces deux entrées d'extrémité 280, 282, en commandant le déplacement d'un tiroir hydraulique 284 du clapet de pressurisation, agira sur le carburant délivré par une sortie de pilotage de ce clapet 286 reliée directement aux injecteurs 16 de la chambre de combustion 18.

Selon l'invention, le clapet de pressurisation comporte deux niveaux de pressurisation dépendant du régime moteur de la turbomachine, un niveau haut et un niveau bas. Le niveau haut correspond à un niveau de pressurisation élevée nécessaire pour assurer un fonctionnement dans les phases de croisière de la turbomachine (fonctionnement aux grands débits), le niveau bas correspondant à un niveau de pressurisation juste suffisant pour assurer un fonctionnement de la turbomachine dans les phases de décollage ou de roulage au sol (fonctionnement aux faibles débits).

En effet, le niveau de pressurisation élevée des forts régimes est beaucoup trop important et en général inapproprié pendant les phases à bas régime (phases de ralenti), ce qui notamment a pour effet d'entraîner des fuites de carburant. En réduisant le niveau de pressurisation à ces bas régimes, on limite ces fuites et on réduit les échauffements de recirculation dans la soupape bypass.

Ce double niveau de pressurisation du clapet 28 est obtenu par un jeu de trois diaphragmes 30, 32, 34. Le premier 30 est placé sur une conduite montée en parallèle sur l'électro-robinet d'arrêt 26 et reliée entre la sortie de la pompe haute pression 10 et la seconde entrée d'extrémité 282 du clapet de pressurisation 28, le second 32 est disposé au niveau de la seconde entrée 262 de l'électro-robinet d'arrêt 26, et le troisième 34 est disposé entre la seconde sortie d'utilisation 232 du clapet doseur 22 et une fois encore la seconde entrée d'extrémité 282 du clapet de pressurisation 28.

Le fonctionnement normal du système d'injection est le suivant. On notera que dans le fonctionnement en arrêt (non illustré), l'électro-robinet d'arrêt 26 admet la haute pression P1 obligeant le clapet de pressurisation à se fermer (passage en stop) sous l'action de cette pression admise alors directement au niveau de sa seconde entrée extrémité 282.

Pour les faibles débits de carburant, le tiroir 224 du clapet doseur est dans la position de la figure 1 fermant la première entrée d'alimentation 230. Le troisième diaphragme 34 est ainsi isolé de la pression P1 et la pression à la seconde entrée d'extrémité 282 du clapet de pressurisation est déterminée par le premier diaphragme 30 alimenté par la pression P1 et le second diaphragme 32 mis à la pression basse P2. Il en résulte un niveau bas de pression aval du clapet 28 donné par la relation :

$$Paval - P2 = (P1-P2)/[1+(K2/K1)^2]$$

avec K1 et K2 les gains respectifs des premier et second diaphragmes.

Pour les forts débits, le tiroir 224 du clapet doseur est dans la position de la figure 2 ouvrant la première entrée d'alimentation 230 à la pression P1. Le troisième diaphragme 34 est mis alors à la pression P1 et la pression à la seconde entrée d'extrémité 282 du clapet de pressurisation est déterminée par les premier et troisième diaphragmes 30, 34 alimentés par la pression P1 et le second diaphragme 32 restant mis à la pression basse P2. Il en résulte un niveau haut de pression aval du clapet 28 donné par la relation :

$$Paval - P2 = (P1-P2)/[1+(K2)^2/(K1+K3)^2]$$

avec K1, K2 et K3 les gains respectifs des premier, second et troisième diaphragmes.

En définitive, la configuration de l'invention est particulièrement intéressante car elle permet :

. le rallumage vol avec la pompe HP dimensionnée plein gaz,

. la réduction des échauffements de recirculation dans la zone critique des ralentis (réduction des débits et des pressions de recirculation),

. un dimensionnement optimum des différents vérins qui disposent d'une pression élevée lorsqu'elle est nécessaire (cylindrée et donc masse réduite).

Il en résulte aussi un besoin de débit de la pompe haute pression moins grand, un meilleur rendement de cette pompe et donc une pompe de dimension plus petite qui réduit l'excédent de débits pendant les phases de ralenti.

## Revendications

1. Système d'injection de carburant dans une turbomachine, comprenant une pompe haute pression (10) pour pressuriser à une haute pression P1 le carburant issu d'un réservoir de carburant (12), une pluralité d'injecteurs de carburant (16) disposés dans une chambre de combustion de la turbomachine (18), et un dispositif de dosage (14) interposé entre ladite pompe à haute pression et ladite pluralité d'injecteurs pour contrôler le débit de carburant s'écoulant dans les injecteurs depuis la pompe à haute pression, **caractérisé en ce que** ledit dispositif de dosage comporte un clapet de pressurisation (28) piloté selon deux niveaux de pressurisation à partir d'un clapet doseur (22) alimenté en carburant depuis ladite pompe à haute pression.

2. Système d'injection de carburant selon la revendication 1, **caractérisé en ce que** ledit clapet de pressurisation comporte une première entrée d'extrémité (280) reliée à une première sortie d'utilisation (222) dudit clapet doseur et une seconde entrée d'extrémité (282), opposée à ladite première entrée d'extrémité, reliée d'une part à ladite pompe haute pression au travers d'un premier diaphragme (30) et d'autre part à une seconde sortie d'utilisation (232) dudit clapet doseur au travers d'un troisième diaphragme (34), l'alimentation en carburant desdits injecteurs reliés à une sortie de pilotage de ce clapet (286) résultant du déséquilibre des pressions appliquées sur ces deux entrées d'extrémité sous l'action d'un calculateur (24).

3. Système d'injection de carburant selon la revendication 2, **caractérisé en ce que** ledit clapet doseur comporte un tiroir hydraulique (224) qui peut se déplacer linéairement sous la commande dudit calculateur pour, via deux lumières annulaires (226, 228), mettre en communication d'une part une première entrée d'alimentation (220) avec ladite première sortie d'utilisation et d'autre part une seconde entrée d'alimentation (230) avec ladite seconde sortie d'utilisation.

4. Système d'injection de carburant selon l'une quelconque des revendications 1 à 3, **caractérisé en ce que** ledit dispositif de dosage comporte en outre un électro-robinet d'arrêt (26) destiné à agir sur ledit clapet de pressurisation pour couper l'alimentation en carburant desdits injecteurs.

5. Système d'injection de carburant selon la revendication 4, **caractérisé en ce** ledit électro-robinet d'arrêt comporte une première entrée (260) reliée à ladite pompe haute pression, une seconde entrée (262) mise à une basse pression P2 au travers d'un second diaphragme (32), et une sortie (264) reliée à ladite seconde entrée d'extrémité du clapet de pressurisation (28).

## Patentansprüche

1. Kraftstoffeinspritzsystem in einer Turbomaschine, umfassend eine Hochdruckpumpe (10), um den aus einem Kraftstoffbehälter (12) stammenden Kraftstoff auf einen hohen Druck P1 zu bringen, eine Vielzahl von Kraftstoffeinspritzdüsen (16), die in einer Brennkammer der Turbomaschine (18) angeordnet sind, sowie eine Dosiervorrichtung (14), die zwischen der Hochdruckpumpe und der Vielzahl von Einspritzdüsen zwischengeschaltet ist, um die Kraftstoffmenge zu kontrollieren, die von der Hochdruckpumpe aus in die Einspritzdüsen strömt, **dadurch gekennzeichnet, daß** die Dosiervorrichtung ein Druckregelventil (28) aufweist, das ausgehend von einem Dosierventil (22), welches von der Hochdruckpumpe aus mit Kraftstoff gespeist wird, entsprechend zweier Druckbeaufschlagungsstufen gesteuert wird.

2. Kraftstoffeinspritzsystem nach Anspruch 1, **dadurch gekennzeichnet, daß** das Druckregelventil einen ersten endseitigen Eingang (280), welcher mit einem ersten Benutzungsausgang (222) des Dosierventils verbunden ist, sowie einen zweiten endseitigen Eingang (282) aufweist, der dem ersten endseitigen Eingang gegenüberliegt und der einerseits über eine erste Blende (30) mit der Hochdruckpumpe und andererseits über eine dritte Blende (34) mit einem zweiten Benutzungsausgang (232) des Dosierventils verbunden ist, wobei die Kraftstoffversorgung der Einspritzdüsen, die mit einem Steuerungsausgang dieses Ventils (286) verbunden sind, aus dem Ungleichgewicht der unter der Wirkung eines Rechners (24) an diese beiden endseitigen Eingänge angelegten Drücke resultiert.

3. Kraftstoffeinspritzsystem nach Anspruch 2, **dadurch gekennzeichnet, daß** das Dosierventil einen Hydraulikschieber (224) umfaßt, der sich unter der Steuerung des genannten Rechners linear bewegen kann, um über zwei ringförmige Öffnungen (226, 228) einerseits einen ersten Versorgungseingang (220) mit dem ersten Benutzungsausgang und andererseits einen zweiten Versorgungseingang (230) mit dem zweiten Benutzungsausgang zu verbinden.

4. Kraftstoffeinspritzsystem nach irgendeinem der Ansprüche 1 bis 3, **dadurch gekennzeichnet, daß** die genannte Dosiervorrichtung ferner einen Elektroabsperrhahn (26) aufweist, welcher dazu bestimmt ist, auf das Druckregelventil zu wirken, um die Kraftstoffversorgung der Einspritzdüsen zu unterbrechen.

5. Kraftstoffeinspritzsystem nach Anspruch 4, **dadurch gekennzeichnet, daß** der Elektroabsperrhahn einen mit der Hochdruckpumpe verbundenen ersten Eingang (260), einen über eine zweite Blende (32) auf einen niedrigen Druck P2 gebrachten zweiten Eingang (262) sowie einen mit dem zweiten endseitigen Eingang des Druckregelventils (28) verbundenen Ausgang (264) aufweist.

**Claims**

1. A fuel injection system in a turbomachine, the system comprising a high pressure pump (10) for pressurizing the fuel coming from a fuel tank (12) to a high pressure P1, a plurality of fuel injectors (16) disposed in a combustion chamber of the turbomachine (18), and a metering unit (14) interposed between said high pressure pump and said plurality of injectors to control the rate at which fuel flows into the injectors from the high pressure pump, the system being **characterized in that** said metering unit comprises a pressurization valve (28) piloted to occupy two pressure levels by means of a metering valve (22) fed with fuel from said high pressure pump.

2. A fuel injection system according to claim 1, **characterized in that** said pressurization valve comprises a first end inlet (280) connected to a first load outlet (222) of said metering valve, and a second end inlet (282) opposite said first end inlet and connected firstly to said high pressure pump via a first diaphragm (30) and secondly to a second load outlet (232) of said metering valve via a third diaphragm (34), fuel feed to said injectors connected to a pilot outlet (286) of said pressurization valve resulting from the unbalance in the pressures applied to the two end inlets thereof under the control of a computer (24).

3. A fuel injection system according to claim 2, **characterized in that** said metering valve comprises a hydraulic slide (224) which can be moved linearly under the control of said computer and having two annular grooves (226, 228) serving to establish communication respectively between a first feed inlet (220) and said first load outlet, and secondly between a second feed inlet (230) and said second load outlet.

4. A fuel injection system according to any one of claims 1 to 3, **characterized in that** said metering unit further comprises a solenoid stop valve (26) for acting on said pressurization valve to interrupt the fuel feed to said injectors.

5. A fuel injection system according to claim 4, **characterized in that** said solenoid stop valve comprises a first inlet (260) connected to said high pressure pump, a second inlet (262) connected to low pressure P2 via a second diaphragm (32), and an outlet (264) connected to said second end inlet of the pressurization valve (28).

FIG.1

EP 1 231 368 B1

FIG.2

EP 1 231 368 B1